# EUROPÄISCHE PATENTSCHRIFT

(11) **EP 0 650 554 B1**
(45) Veröffentlichungstag und Bekanntmachung des Hinweises auf die Patenterteilung: **18.12.1996**
(21) Anmeldenummer: 93915904.2
(22) Anmeldetag: 14.07.1993
(51) Int. Cl.: F02C 7/16, F01K 21/04, F02C 6/00

(54) **VERFAHREN ZUM BETREIBEN EINER GASTURBINE**
PROCESS FOR OPERATING A GAS TURBINE
PROCEDE POUR FAIRE FONCTIONNER UNE TURBINE A GAZ

(30) Priorität: 17.07.1992 DE 4223528
(43) Veröffentlichungstag der Anmeldung: 03.05.1995
(73) Patentinhaber: GAS-, ELEKTRIZITÄTS- UND WASSERWERKE KÖLN AG., D-50823 Köln (DE)
(72) Erfinder: WINKLER, Wolfgang, D-21423 Winsen (DE); SAURER, Kurt, D-51427 Bergisch Gladbach (DE)
(74) Vertreter: Nau, Walter, Dipl.-Ing.
(86) Internationale Anmeldenummer: EP9301842
(87) Internationale Veröffentlichungsnummer: WO9402728

(56) Entgegenhaltungen:
- WO-A-80/00864
- DE-C- 767 491
- FR-A- 2 092 741
- GB-A- 575 895
- GB-A- 2 236 145
- SU-A- 182 177
- US-A- 3 238 719

## Beschreibung

Die Erfindung betrifft ein Verfahren zum Betreiben einer Gasturbine nach dem Oberbegriff des Anspruchs 1.

Dampfkraftwerke zeichnen sich durch eine tiefe untere Prozeßtemperatur aus, da üblicherweise der Dampf bis zu einem möglichst niedrigen Kondensatordruck und entsprechend niedriger Kondensatortemperatur (untere Prozeßtemperatur) in Dampfturbinen entspannt wird. Je höher die thermodynamische Mitteltemperatur bei der Wärmeübertragung des Prozesses und somit die obere Prozeßtemperatur ist, desto geringer ist der den Wirkungsgrad begrenzende Exergieverlust bei der Wärmeübertragung zwischen Dampf und Rauchgas. Übliche Maßnahmen zur Erhöhung der thermodynamischen Mitteltemperatur sind Zwischenüberhitzung und regenerative Speisewasservorwärmung.

Der Gasturbinenprozeß gestattet demgegenüber eine wesentlich höhere obere Prozeßtemperatur, die durch die zulässige Turbineneintrittstemperatur (heute etwa 1000 bis 1200° C) begrenzt ist. Es ist deshalb erforderlich, den Luftüberschuß bei der Verbrennung so hoch zu wählen, daß die Brennkammeraustrittstemperatur bis auf die zulässige Turbineneintrittstemperatur abgesenkt wird. Nachteilig beim Gasturbinenprozeß ist auch die relativ hohe Turbinenaustrittstemperatur, die die hohe untere Prozeßtemperatur des Gasturbinenprozesses bedingt.

Der Wirkungsgrad des reinen Gasturbinenprozesses kann durch regenerative Vorwärmung der Verbrennungsluft mittels Turbinenabgase und durch Zwischenerhitzung in Zwischenbrennkammem bei mehrstufiger Anordnung der Gasturbine erhöht werden.

Ein anderer Weg zur Wirkungsgradsteigerung wird durch die Kombination von Gas- und Dampfprozessen beschritten. So führt die Nutzung des heißen Gasturbinenabgases als Wärmequelle eines nachgeschalteten, externen Dampfprozesses im GuD (Gas- und Dampfprozeß) zu einer deutlichen Steigerung des Prozeßwirkungsgrades, verglichen mit den Einzelprozessen. Eine Wirkungsgradsteigerung des Gasturbinenprozesses kann auch mit dem STIG-Verfahren (STeam Injected Gasturbine) erreicht werden. Hierbei wird Dampf, der mit dem heißen Gasturbinenabgas erzeugt wurde, in die Brennkammer der Gasturbine eingeblasen und mit dem Brennkammergas vermischt. Dadurch wird die Leistung der Turbine gesteigert und zugleich die NOx-Bildung vermindert. Ein solcher Prozeß ist aus der EP-A- 0 439 754 bekannt. Diese Druckschrift befaßt sich im wesentlichen mit dem Hochfahren einer solchen Anlage. Nebenbei ist auch der Betrieb angesprochen. Die einzige Wärmequelle dieser Gas/DampfKraftwerksanlage ist die Brennkammer 3 der Gasturbine 1/2. Ist die Anlage nämlich hochgefahren (Beschreibung, Spalte 4, Zeile 36 bis Spalte 5, Zeile 44), so ist der Abhitzekessel 4 die einzige Dampfquelle für die Turbine 8 bzw. die Turbinen 8 und 9 und für die Einblasung von Dampf in die Brennkammer. Da die zur Eindüsung zur Verfügung stehende Dampfmenge begrenzt ist, folgt, daß die zur Kühlung der Brennkammergase erforderliche Luftmenge immer noch wesentlich über der zur Verbrennung erforderlichen liegt. Dies hat zur Folge, daß die Verdichterleistung deutlich über der zur Förderung der stöchiometrisch erforderlichen Luftmenge liegt. In der EP-A- 0 439 754 ist zwar noch ein Dampfspeicher an den Dampfprozeß angeschlossen. Dieser dient allerdings nur zu einer autonomen Inbetriebsetzung einer mit der Gasturbogruppe gekoppelten Dampfturbine des Dampfkreislaufes. Ein Dauerbetrieb mit dem Speicher ist nicht möglich. Eine darüber hinaus gehende Kopplung der Gas/DampfKraftwerksanlage ist nicht vorgesehen.

Es sind weiterhin Gasturbinen bekannt (FR-A- 2 092 741 und GB-A-2 236145) bei denen die Abgase der Gasturbine zur Erzeugung von Wasserdampf genutzt werden, der zur Kühlung des Gasturbinenprozesses, z.B. in die Brennkammer, zugegeben wird. Dabei kann bei der FR-A-2 092 741 eine solche Wassermenge zugegeben werden, daß die Verdichterleistung nur zur Förderung der stöchiometrisch erforderlichen Luftmenge ausgelegt wird. Ansonsten sind diese letztgenannten Gasturbinen als Einzelanlagen ausgelegt und nicht Bestandteil eines Dampfprozesses, obwohl in der GB-A- 2 236 145 erwähnt ist, daß auch Dampf aus einer externen Quelle entnommen werden kann.

Aufgabe der Erfindung ist es daher, eine Gasturbine in einen Dampfprozeß so zu integrieren, daß eine optimale Ausnutzung des Wasserdampfes des Dampfprozesses zur Leistungssteigerung einer Gasturbine und der Abwärme der Gasturbine erfolgt.

Die Aufgabe wird gelöst durch die kennzeichnenden Merkmale des Anspruchs 1. Durch Verwenden einer beliebigen Dampfkraftanlage, Dampfprozeßanlage oder Dampfheizanlage als Dampfquelle ist es möglich, die Größe der Gasturbine auf die verfügbare Menge des externen Dampfes abzustimmen, so daß im Grenzfall die gesamte Kühlluftmenge durch Wasserdampf ersetzt wird und der Luftverdichter lediglich die stöchiometrische Luftmenge zu fördern braucht. Das bedeutet eine erhebliche Einsparung an Verdichterleistung, die als zusätzliche Nutzleistung an der Turbinenwelle zur Verfügung steht. Gleichzeitig wird der Dampf erhitzt, so daß eine weitere Ausnutzung des Dampfes als Turbinenleistung zur Verfügung steht. Weiterhin wird die Abgaswärme hinter der Turbine zur Erzeugung von Wasserdampf genutzt, der in einem getrennten Dampfprozeß zur Erzeugung von Wellenleistung in einer Dampfturbine genutzt wird, wobei der Abdampf der Dampfturbine nach Zwischenüberhitzung von der Abgaswärme hinter der Gasturbine ganz oder teilweise dem Brennkammergas zugeführt wird. Auch der Niederdruckdampf aus der Dampfquelle oder aus dem Abhitzekessel kann dem Zwischenüberhitzer zugeführt und soweit wie möglich überhitzt werden, bevor er zu der Brennkammer geleitet wird. Die Zwischenüberhitzung reduziert bei gleichem Rauchgasabwärmestrom die Dampferzeugung im Abhitzekessel und beienflußt damit die Leistung der Gasturbine. Durch die vorgeschlagenen Maßnahmen läßt sich das zuvor beschriebene Verfahren noch weiter verbessern, wenn die thermodynamische Mitteltemperatur der Dampfseite in Verbindung mit der Abgaswärme hinter der Gasturbine soweit wie möglich angehoben wird.

Die Dampfkraftanlage, Dampfprozeßanlage oder Dampfheizanlage wird dadurch vereinfacht, daß die Gasturbine einen Dampfüberhitzer oder eine Niederdruckdampfturbine ersetzt.

Der Wasserdampf kann in das Brennkammergas in den Bereich der Brennkammer oder in eine Verbindungsleitung zwischen Brennkammer und Turbine oder in beide eingedüst werden. Derartige Eindüsungsstellen sind an sich bekannt.

Arbeitet die Gasturbine mit Zwischenerhitzung zwischen einer Hochdruckturbine und einer Niederdruckturbine, wobei das Abgas der Hochdruckturbine durch Wärmeübertragung vom Brennkammergas vor der Hochdruckturbine aufgeheizt wird, wird die mittlere Temperatur des Gasturbinenprozesses wirkungsgradsteigemd angehoben und die erforderliche Abkühlung der Brennkammergase vor Eintritt in die Hochdruckturbine teilweise durch Wärmeübertragung von deren Abgas, teilweise durch Vermischen mit Fremddampf erreicht.

Bei einer vorteilhaften Ausbildung der Erfindung, bei der das Brennkammergas vor Eintritt in die Turbine durch Wärmeübertragung auf Wasser und Wasserdampf gekühlt wird, wobei der Wasserdampf in einem getrennten Dampfprozeß verwendet wird, kann auch bei einer einstufigen Gasturbine eine teilweise Abkühlung der Brennkammergase durch Wärmeübertragung bewirkt werden. Der dabei erzeugte Wasserdampf kann in einer getrennten Dampfkraftanlage oder als Prozeß- oder Heizdampf genutzt werden. Vorteilhaft ist dabei, daß sich ein getrennter Dampfkessel erübrigt.

Von Vorteil ist auch, daß eine externe Nutzung des im Abhitzekessel erzeugten Wasserdampfes möglich ist und somit eine große Flexibilitat bei der Belieferung von Dampfverbrauchern gegeben ist.

Durch eine vorteilhafte Ausbildung der Erfindung, bei der der Abgasstrom bis unter den Taupunkt des Abgases abgekühlt wird, gelingt es, die Kondensationswärme zurückzugewinnen, die zu Heizzwecken eingesetzt werden kann. Dabei fällt auch ein erheblicher Teil des Speisewassers wieder an, das nach geeigneter Aufbereitung wieder verwendet wird. Die Aufbereitung ist insbesondere bei Verwendung von Erdgas als Kraftstoff für die Gasturbine problemlos. Wenn keine Heizwärme benötigt wird und dennoch das Speisewasser zurückgewonnen werden soll, so kann die Kondensationswärme über beliebige andere Wärmesenken, wie z.B. Kühltürme oder Flußwasser abgeführt werden.

Ist im Abgasstrom hinter der Turbine ein Abhitzekessel angeordnet, der in Strömungsverbindung mit der Leitung oder mit einem getrennten Dampfprozeß steht, wird die Abwärme der Gasturbine zur Erzeugung von Wasserdampf genutzt, der entweder dem externen Wasserdampf zur Brennkammergaskühlung beigemischt wird oder in dem getrennten Dampfprozeß Verwendung findet.

Eine vorteilhafte Weiterbildung der Erfindung, wobei im Brennkammergasstrom zwischen Brennkammer und Hochdruckturbine ein Gaswärmetauscher angeordnet ist, der in Strömungsverbindung mit dem Auslaß der Hochdruckturbine und dem Einlaß der Niederdruckturbine steht, ermöglicht, daß das teilexpandierte Abgas durch Warmeübertragung zwischenerhitzt wird, ohne daß eine weitere Brennkammer und der zu deren Betrieb erforderliche Luftüberschuß erforderlich sind. Dadurch werden Verdichterleistung gespart und der Aufbau der Gasturbine einfach.

Durch eine vorteilhafte Ausbildung der Erfindung, wobei im Brennkammergasstrom zwischen Brennkammer und Turbine der Dampfwärmetauscher angeordnet ist, dessen Eintritt mit dem Abhitzekessel und dessen Austritt mit einem externen Wasserdampfverbraucher in Strömungsverbindung steht, kann im Abhitzekessel Hochdruckdampf erzeugt werden, der anschließend im Dampfwärmetauscher überhitzt und einem Hochdruckdampfprozeß zugeführt wird, wobei zugleich das Brenngas vor der Turbine abgekühlt wird.

Wird im Abgasstrom hinter dem Abhitzekessel ein Kondensator angeordnet, dessen Kühlsystem in Strömungsverbindung mit einem Wärmeverbraucher, insbesondere einem Heizsystem steht, wird Kühlwärme (Kondensationswärme) auf niedrigem Temperaturniveau gewonnen, wie sie beispielsweise für Raumheizungen geeignet ist. Auch wird durch die erfindungsgemäße Anordnung der größte Teil des Speisewassers zurückgewonnen und nach Aufbereitung dem Dampfprozeß wieder zugeführt.

Durch eine vorteilhafte Weiterbildung der Erfindung, wobei die Leitschaufeln zumindest der ersten Stufe der Turbine mit Wasserdampf beschickt werden, der nach dem Kühlen der Schaufeln in den Brennkammergasstrom gelangt, wird auch bei fehlendem Luftüberschuß und damit fehlender Kühlluft eine Schaufelkühlung und damit die höchstmögliche Turbineneintrittstemperatur verwirklicht, die einen hohen Gasturbinenwirkungsgrad gewährleistet.

Weitere Merkmale der Erfindung ergeben sich aus der folgenden Beschreibung und den Zeichnungen, in denen Beispiele der Erfindung schematisch dargestellt sind.

Es zeigen:
- Fig. 1: Schema eines Gasturbinenprozesses mit Dampfeinblasung und einstufiger Turbine,
- Fig. 2: Schema eines Gasturbinenprozesses mit Hochdruckturbine, Niederdruckturbine und Zwischenerhitzung sowie Dampfeinblasung,
- Fig. 3: Schema eines Gasturbinenprozesses mit Dampfeinblasung entsprechend Fig. 1 bei dem zusätzlich eine Dampfturbine integriert ist und
- Fig. 4: Schema eines Gasturbinenprozesses mit Dampfeinblasung und integrierter Dampfturbine nach Fig. 3, bei dem der Dampf hinter der Dampfturbine einem Zwischenüberhitzer zugeführt wird.

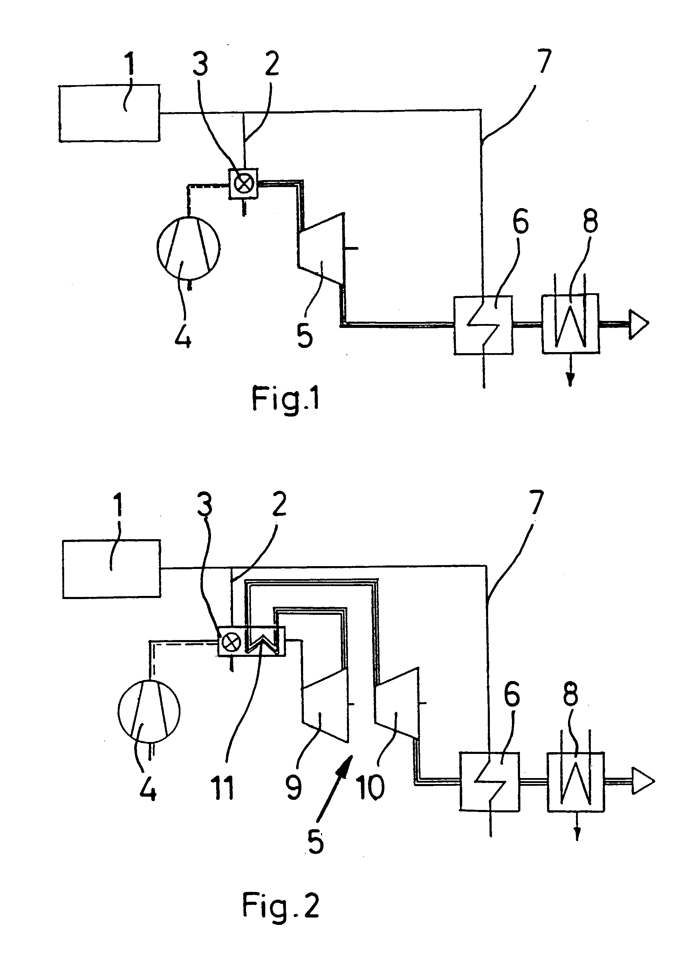

Figur 1-4 zeigen, soweit im einzelnen dargestellt, eine Gasturbine mit einem Luftverdichter 4 und einer Turbine 5, wobei die Turbine 5 über eine Brennkammer 3 in Strömungsverbindung mit dem Luftverdichter 4 steht, denselben antreibt und Wellenleistung abgibt. Der Luftverdichter 4 liefert nur die zur Verbrennung des in die Brennkammer 3 eingebrachten Kraftstoffes erforderliche Luftmenge. Die Abkühlung der Brennkammergase erfolgt durch Zugabe von Wasserdampf, der einer externen Dampfquelle 1 bei Brennkammerdruck entnommen und über eine Leitung 2 in die Brennkammer 3 geleitet wird. Dort wird ein homogenes Gemisch aus Brennkammergas und Wasserdampf gebildet, das die zulässige Turbineneintrittstemperatur aufweist.

Nach Austritt aus der Turbine 5 wird das Abgas in einem Abhitzekessel 6 abgekühlt. Im Abhitzekessel 6 wird Wasser verdampft, das als Wasserdampf über eine Abhitzedampfleitung 7 zur Leitung 2 gelangt und sich dort mit dem Wasserdampf aus der externen Dampfquelle 1 vermischt.

Nach Verlassen des Abhitzekessels 6 gelangt das Abgas in den Abgaskondensator 8, wo es bis unterhalb der Taupunkttemperatur abgekühlt wird. Die Kühlwärme steht zu Heizzwecken zur Verfügung oder wird in einem Kühlturm an die Umgebung abgeführt. Das anfallende Kondensat wird nach entsprechender Aufbereitung als Speisewasser verwendet. Das Abgas gelangt nach Verlassen des Abgaskondensators in einen Schornstein.

Die Anordnung von Figur 2 unterscheidet sich von der der Figur 1 durch die Aufteilung der Turbine 5 in eine Hochdruckturbine 9 und eine Niederdruckturbine 10. Nach der Teilentspannung des Abgases in der Hochdruckturbine 9 wird dieses in einem Wärmetauscher 11 zwischenerhitzt und anschließend in der Niederdruckturbine 10 entspannt. Der Wärmetauscher 11, der im Brennkammergasstrom vor der Hochdruckturbine 9 angeordnet ist, dient gleichzeitig zum Abkühlen der Brennkammergase, so daß bei dieser Anordnung die Brennkammergase sowohl durch Mischen mit Wasserdampf als auch durch Wärmeübertragung gekühlt werden.

Bei der Dampfquelle 1 kann es sich in beiden Anordnungen um ein beliebiges Dampfkraftwerk oder um eine Dampfprozeßanlage handeln, wobei die gesamte Niederdruckdampfmenge durch die entsprechend dimensionierte Gasturbine geleitet wird.

Im Gegensatz zu bisher verwendeten Formen der Dampfeinblasung in Gasturbinenbrennkammern, etwa zur NOx-Reduzierung, wird bei der Erfindung davon ausgegangen, daß die gesamte Dampfmenge eines Dampfkraftwerkes oder zumindest ein wesentlicher Anteil davon nicht mehr im Niederdruckteil der Dampfturbine sondern in der nachgeschalteten Gasturbine entspannt wird. Der hier beschriebene Prozeß kann also gleichzeitig zur Leistungserhöhung der Gasturbine und des Dampfprozesses verwendet werden. Die Erfindung ist daher auch zur Nachrüstung vorhandener Dampfkraftwerke geeignet.

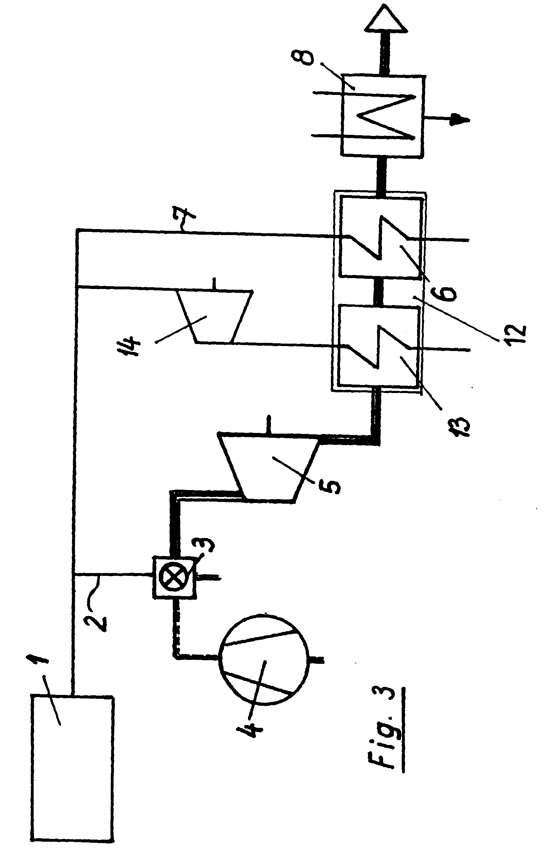

Fig. 3 stellt eine vorteilhafte Weiterbildung der Erfindung gemäß den Grundschaltungen nach den Fig. 1 und 2 dar und kann bei beiden Grundschaltungen verwendet werden. Dazu wird der Abhitzekessel 6 in einen Zweidruckkessel 12 integriert. Der Hochdruckteil 13 des Zweidruckkessels 12 versorgt eine Gegendruckturbine 14 mit Hochdruckdampf, der dort mit weiterer Leistungsabgabe auf den Brennkammerdruck der Brennkammer 3 entspannt wird. Die Heizflächen des Hochdruckteils 13 und des Niederdruckteils( Abhitzekessel 6 ) sind dabei so angeordnet, daß die Temperaturdifferenzen zwischen Rauchgas- und Dampfseite möglichst gering sind. Die sich dann ergebende Verkämmung der Heizflächen von Hochdruck- 13 und Niederdruckteil( Abhitzekessel 6 ) im Zweidruckkessel 12 ist in Fig. 3 wegen der besseren Übersichtlichkeit weggelassen worden.

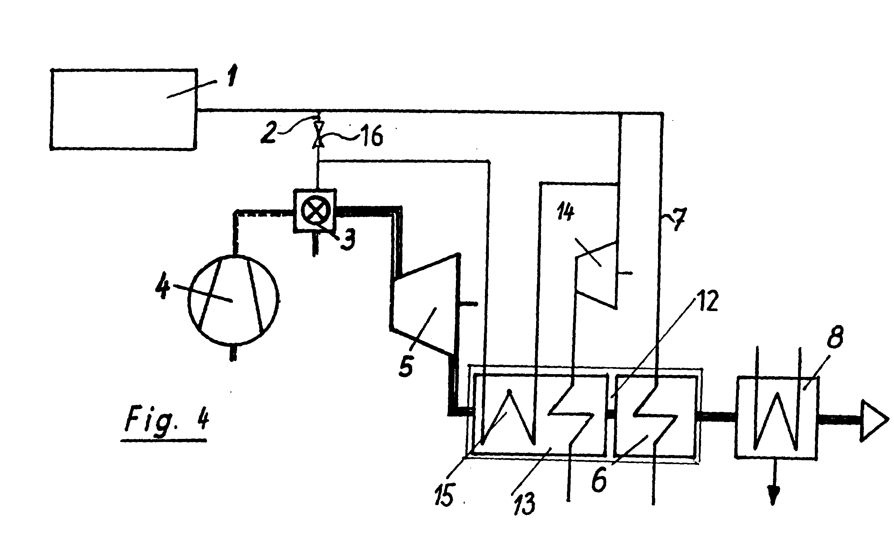

Eine andere vorteilhafte Weiterbildung der Erfindung, wieder für beide Grundschaltungen nach den Fig. 1 und 2 geeignet, zeigt Fig. 4. Der Grundgedanke hierbei ist, daß der mit relativ niedriger Temperatur vorliegende Niederdruckdampf in den Abhitzekessel (Zweidruckkessel 12) zurückgeführt und dort in einem Zwischenüberhitzer 15 soweit wie möglich überhitzt wird, bevor er zu der Brennkammer geleitet wird. Die Zwischenüberhitzung reduziert bei gleichem Rauchgasabwärmestrom die Dampferzeugung im Abhitzekessel und beeinflußt damit die Leistung der Gasturbine. Deshalb kann es sinnvoll sein, nur einen oder zwei der drei verfügbaren Niederdruckdampfströme ( von der externer Dampfquelle 1, vom Niederdruckteil( Abhitzekessel 6 ) oder von der Gegndruckturbine 14) zum Zwischenüberhitzer 15 zu führen und den oder die verbleibenden Niederdruckdampfströme ohne Zwischenüberhitzung direkt in die Brennkammer 3 einzudüsen. Zur Vereinfachung ist dies in Fig. 4 durch ein Ventil 16 in der Leitung 2 angedeutet.

Das erfindungsgemäße Verfahren gestattet, unter Verwendung gängiger Komponenten eine Gasturbine als Teil eines Dampfprozesses zu betreiben, die sich durch hohen thermodynamische Wirkungsgrad, hohe Leistung und niedrige Schadstoffemission auszeichnet.

Die Zwischenüberhitzung nach der Gegendruckturbine ist auch unabhängig vom Vorhandensein einer externen Dampfquelle im sogenannten Cheng- oder STIG-Prozeß als Prozeßverbesserung einsetzbar.

## Patentansprüche

1. Verfahren zum Betreiben einer Gasturbine als Teil eines Dampfprozesses, wobei die Gasturbine zumindest einen Luftverdichter (4), eine Brennkammer (3) und eine Turbine (5, 10) aufweist, die den Luftverdichter (4) antreibt und Wellenleistung abgibt, wobei der Luftverdichter (4) zumindest das zur Verbrennung erforderliche Luftvolumen fördert, wobei die Abkühlung des Brennkammergases auf die zulässige Turbineneintrittstemperatur zumindest teilweise durch Vermischen desselben mit Wasserdampf erfolgt, der einer Dampfquelle (1), die als Dampfkraftanlage, Dampfprozeßanlage oder Dampfheizanlage ausgebildet ist, bei mindestens Brennkammerdruck entnommen wird, und wobei die Abgaswärme hinter der Turbine (5, 10) zur Erzeugung von Wasserdampf in einem Abhitzekessel (6) genutzt wird, der in einer Dampfturbine (14) entspannbar ist,
**dadurch gekennzeichnet,** daß zumindest ein Teil des die Dampfturbine (14) verlassenden Dampfes oder aus der Dampfquelle (1) oder aus dem Abhitzekessel (6) kommenden Dampfes in einem Zwischenüberhitzer (15) von der Abgaswärme hinter der Turbine (5, 10) erwärmt und zum Mischen mit den Brennkammergasen verwendet wird.

2. Verfahren nach Anspruch 1,
**dadurch gekennzeichnet,** daß die Abgaswärme hinter der Turbine (5, 10) zur Erzeugung von Wasserdampf in einem Zweidruckkessel (12) genutzt wird, wobei der Dampf aus dem Hochdruckteil (13) des Zweidruckkessels (12) der Dampfturbine (14) zugeführt wird.

3. Verfahren nach einem der Ansprüche 1 oder 2,
**dadurch gekennzeichnet,** daß der Abgasstrom bis unter den Taupunkt abgekühlt und die dazu erforderliche Kühlwärme vorzugsweise zum Heizen dient.

4. Verfahren nach einem der vorhergehenden Ansprüche,
**dadurch gekennzeichnet,** daß die Gasturbine mit Zwischenerhitzung zwischen einer Hochdruckturbine (9) und einer Niederdruckturbine (10) arbeitet, wobei das Abgas der Hochdruckturbine (9) durch Wärmeübertragung vom Brennkammergas vor der Hochdruckturbine (9) aufgeheizt wird.

5. Verfahren nach einem der vorhergehenden Ansprüche,
**dadurch gekennzeichnet,** daß das Brennkammergas vor Eintritt in die Turbine (5) durch Wärmeübertragung auf Wasser und Wasserdampf gekühlt wird, wobei der Wasserdampf in einem getrennten Dampfprozeß verwendet wird.

6. Verfahren nach einem der vorhergehenden Ansprüche,
**dadurch gekennzeichnet,** daß die Leitschaufeln zumindest der ersten Stufe der Turbine (5, 9, 10) mit Wasserdampf beschickt werden, der nach dem Kühlen der Schaufeln in das Brennkammergas gelangt.

## Claims

1. A method of operating a gas turbine as part of a steam process, wherein the gas turbine has at least one air compressor (4), one combustion chamber (3) and one turbine (5, 10) which drives the air compressor (4) and delivers shaft output, with the air compressor (4) transporting at least that air volume required for combustion, with cooling of the combustion chamber gas to the permitted turbine entry temperature at least in part by mixing it with steam derived, at least at combustion chamber pressure, from a steam source (1) in the form of a steam power plant, steam process plant or steam heating plant and wherein the waste gas heat behind the turbine (5, 10) is used to generate steam in a waste heat boiler (6) which is expandable in a steam turbine (14),
**characterised in that** at least part of the steam leaving the steam turbine (14) or the steam coming from the steam source (1) or the waste heat boiler (6) is heated in an intermediate superheater (15) by the waste gas heat behind the turbine (5, 10) and used for mixing with the combustion chamber gases.

2. A method according to claim 1,
**characterised in that** the waste gas heat behind the turbine (5, 10) is used for generation of steam in a dual-pressure boiler (12), with the steam from the high-pressure section (13) of the dual-pressure boiler (12) fed to the steam turbine (14).

3. A method according to claim 1 or 2,
**characterised in that** the waste gas stream is cooled down to below the dew point and that the cooling heat necessary for this is preferably used for heating.

4. A method according to any one of the preceding claims,
**characterised in that** the gas turbine operates with interheating between a high-pressure turbine (9) and a low-pressure turbine (10), with the waste gas from the high-pressure turbine (9) heated through heat transfer from the combustion chamber gas in front of the high-pressure turbine (9).

5. A method according to any one of the preceding claims,
**characterised in that** the combustion chamber gas is cooled by heat transfer to water and steam prior to entering the turbine (5), with the steam used in a separate steam process.

6. A method according to any one of the preceding claims,
**characterised in that** steam is blown onto the guide blades of at least the first stage of the turbine (5, 9, 10) and after cooling of the blades the said steam enters the combustion chamber gas.

## Revendications

1. Procédé de mise en oeuvre d'une turbine à gaz comme partie d'un cycle de vapeur, dans lequel la turbine à gaz comporte au moins un compresseur d'air (4), une chambre de combustion (3) et une turbine (5, 10) entraînant le compresseur (4) et délivrant la puissance de l'arbre, procédé selon lequel le compresseur (4) fournit au minimum le volume d'air nécessaire à la combustion, le refroidissement des gaz de combustion à la température autorisée pour l'entrée dans la turbine se faisant au moins partiellement par un mélange de ceux-ci avec de la vapeur d'eau fournie par une source de vapeur (1) telle qu'une centrale de vapeur, un cycle de vapeur ou une installation de chauffage à vapeur, et fournie au moins à la pression de la chambre de combustion et la chaleur des gaz d'échappement derrière la turbine (5, 10) étant utilisée pour obtenir de la vapeur d'eau dans un refroidisseur (6), vapeur qui peut se détendre dans une turbine (14),
caractérisé en ce que
au moins une partie de la vapeur quittant la turbine à vapeur (14) ou la source de vapeur (1) ou le refroidisseur (6) est chauffée dans un surchauffeur intermédiaire (15) par la chaleur des gaz d'échappement en aval de la turbine (5, 10) et est mélangée aux gaz de combustion.

2. Procédé selon la revendication 1,
caractérisé en ce que
la chaleur des gaz d'échappement derrière la turbine (5, 10) est utilisée pour obtenir de la vapeur d'eau dans une cuve à double pression (12), la vapeur étant amenée à la turbine à vapeur (14) à partir de la partie haute pression (13) de la cuve à double pression (12).

3. Procédé selon l'une des revendications 1 ou 2;
caractérisé en ce que
le flux de gaz d'échappement est refroidi jusqu'au point de condensation et la chaleur de refroidissement sert de préférence au chauffage.

4. Procédé selon l'une des revendications précédentes,
caractérisé en ce que
la turbine à gaz travaille avec une surchauffe intermédiaire entre une turbine haute pression (9) et une turbine basse pression (10), le gaz d'échappement de la turbine haute pression (9) étant chauffé par le transfert de la chaleur des gaz de la chambre de combustion en aval de la turbine haute pression.

5. Procédé selon l'une des revendications précédentes,
caractérisé en ce que
le gaz de combustion est refroidi en eau et vapeur d'eau par transfert de chaleur en amont de la turbine (5), la vapeur d'eau étant utilisée dans un cycle de vapeur séparé.

6. Procédé selon l'une des revendications précédentes,
caractérisé en ce que
les aubes directrices au moins du premier étage de la turbine (5, 9, 10) sont alimentées en vapeur d'eau arrivant dans les gaz de combustion après avoir refroidi les aubes.
